(19) Europäisches Patentamt
European Patent Office
Office européen des brevets

(11) **EP 1 999 884 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(51) Int Cl.:
*H04L 9/30* (2006.01)    *H04L 9/06* (2006.01)
*G06F 7/72* (2006.01)

(21) Anmeldenummer: **06841462.2**

(22) Anmeldetag: **19.12.2006**

(86) Internationale Anmeldenummer:
**PCT/EP2006/069917**

(87) Internationale Veröffentlichungsnummer:
**WO 2007/112791 (11.10.2007 Gazette 2007/41)**

(54) **VERFAHREN ZUM SICHEREN ERMITTELN VON DATEN**

METHOD FOR THE SECURE DETERMINATION OF DATA

PROCÉDÉ DE DÉTERMINATION FIABLE DE DONNÉES

(84) Benannte Vertragsstaaten:
**DE ES FR GB IT**

(30) Priorität: **28.03.2006 DE 102006014353**

(43) Veröffentlichungstag der Anmeldung:
**10.12.2008 Patentblatt 2008/50**

(73) Patentinhaber: **SIEMENS AKTIENGESELLSCHAFT**
**80333 München (DE)**

(72) Erfinder:
• **BRAUN, Michael**
  **81825 München (DE)**
• **KARGL, Anton**
  **80639 München (DE)**
• **MEYER, Bernd**
  **81739 München (DE)**
• **PYKA, Stefan**
  **85570 Markt Schwaben (DE)**

(56) Entgegenhaltungen:
**US-A1- 2002 029 346**

• **JOYE M ET AL: "THE MONTGOMERY POWERING LADDER" 13. August 2002 (2002-08-13), CRYPTOGRAPHIC HARDWARE AND EMBEDDED SYSTEMS. INTERNATIONAL WORKSHOP, PAGE(S) 291-302 , XP001160513 Seite 294 - Seite 300**
• **IZU T ET AL: "IMPROVED ELLIPTIC CURVE MULTIPLICATION METHODS RESISTANT AGAINST SIDE CHANNEL ATTACKS" 16. Dezember 2002 (2002-12-16), PROGRESS IN CRYPTOLOGY-INDOCRYPT. INTERNATIONAL CONFERENCE IN CRYPTOLOGY IN INDIA. PROCEEDINGS, PAGE(S) 296-313 , XP001160564 Seite 299 - Seite 308**

**Beschreibung**

Die Erfindung betrifft ein Verfahren zum sicheren Ermitteln von Daten, bei dem in einem ersten Prozessor eine mathematische Operation mit einem Schlüssel auf einen Punkt einer elliptischen Kurve angewendet wird, wobei der Schlüssel als binäre Zahl mit einer Sequenz von Bits (bi) darstellbar ist.

Asymmetrische Kryptographiesysteme gewährleisten durch die Einrichtung von Schlüsselpaaren aus privatem und öffentlichem Schlüssel ein erhöhtes Maß an Sicherheit dahingehend, dass es für einen Angreifer nahezu unmöglich ist, in endlicher Zeit den privaten Schlüssel oder die mit öffentlichem Schlüssel verschlüsselte Nachricht zu entschlüsseln. Übliche Kryptographiesysteme wie etwa solche, die auf elliptischen Kurven beruhen, basieren auf einer Verschlüsselung, die in polynomieller Zeit durchführbar, jedoch nur in exponentieller Zeit relativ zur Länge der Schlüssel in Bits invertierbar ist. Bei auf elliptischen Kurven basierenden Systemen werden heute Schlüssellängen von n = 160 bis 192 Bits verwendet, bei den auf RSA-Algorithmen basierenden Systemen sind dazu Längen von n = 1024 bis 1536 Bits für ein etwa gleiches Sicherheitsniveau anzusetzen.

Somit sind kryptographische Verfahren auf Basis elliptischer Kurven performanter und benötigen eine geringere Bandbreite zur Übertragung der Systemparameter als andere kryptographische Verfahren bei vergleichbarem Grad an erreichbarer Sicherheit.

Als Beispiel sei hier das bekannte Diffie-Hellman-Verfahren zur Vereinbarung eines gemeinsamen Schlüssels zwischen zwei Kommunikationsteilnehmern basierend auf elliptischen Kurven umrissen. Hierbei kennt der erste Kommunikationsteilnehmer A einen Sicherheitsparameter $r_a$ und der zweite Kommunikationsteilnehmer B einen Sicherheitsparameter $r_b$. Nachdem sich die beiden Kommunikationsteilnehmer auf eine elliptische Kurve und auf einen gemeinsamen Punkt P auf dieser elliptischen Kurve geeinigt haben, ermittelt der Kommunikationsteilnehmer A einen Wert

$$Q_a = r_a * P$$

und der Kommunikationsteilnehmer B einen Wert

$$Q_b = r_b * P.$$

Im Anschluss hieran wird vom Kommunikationsteilnehmer A der Wert $Q_a$ an den Kommunikationsteilnehmer B übertragen und der Wert $Q_b$ vom Kommunikationsteilnehmer B an den Kommunikationsteilnehmer A übertragen. In einer weiteren Skalarmultiplikation ermittelt nun der Kommunikationsteilnehmer A den gemeinsamen Schlüssel

$$K = r_a * Q_b = r_a * r_b * P$$

und der Kommunikationsteilnehmer B denselben gemeinsamen Schlüssel

$$K = r_b * Q_a = r_b * r_a * P.$$

Diese Skalarmultiplikationen bilden somit einen wesentlichen Baustein in kryptographischen Verfahren auf Basis elliptischer Kurven. Besonders vorteilhaft ist die Anwendung von elliptischen Kurven, da die Invertierungsoperation, das heißt die Ermittlung eines Skalars $r_{a,b}$ aus der Kenntnis der Punkte $Q_{a,b}$ und P, so dass $Q_{a,b} = r_{a,b} * P$ gilt, nur mit erheblichem Rechenaufwand berechnet werden kann. Nach heutigem Kenntnisstand ist die Skalarmultiplikation in polynomieller Zeit berechenbar aber nur in exponentieller Zeit invertierbar.

Die bekannten kryptographischen Verfahren auf Basis elliptischer Kurven sind jedoch hinsichtlich sog. Seitenkanalangriffe verletzbar. Diese stellen eine Alternative zu den auf Invertierung der Verschlüsselung beruhenden Angriffsmethoden dar, um möglichst effizient den der Verschlüsselung zugrunde liegenden Algorithmus zu brechen. Sie sind insbesondere bei mobilen Hilfsmitteln wie z.B. Smartcards oder Dongles einsetzbar, auf denen geheimes Schlüsselmaterial gespeichert ist, um einen verschlüsselten Austausch von Nachrichten zu ermöglichen oder digitale Signaturen zu erzeugen oder Nachrichten wieder zu entschlüsseln.

Der Angreifer nutzt die vergleichsweise leichte Zugänglichkeit von Datenleitungen der entsprechenden Schaltungen aus, um physikalische Größen wie Strom, elektromagnetische Abstrahlung, Ergebnisse bei induzierten Fehlern oder Laufzeiten bestimmter Berechnungen zu messen. In unmittelbarer Auswertung der Messwerte anhand einer einfachen Stromanalyse (SPA) oder durch Aufzeichnung von Messwerten wie Strom mittels eines Speicheroszilloskops und anschließender statistischer Auswertung können auf effiziente Weise Informationen über den zugrunde liegenden Algorithmus oder im schlimmsten Fall Informationen über einen aktuell vorliegenden Schlüssel gewonnen werden.

Letzteres soll anhand eines Beispiels näher erläutert werden: ein Verfahren zur Verschlüsselung sieht sowohl für Algorithmen basierend auf elliptischen Kurven als auch für solche basierend auf dem RSA-Verfahren die Anwendung einer mathematischen Operation vor.

Im Fall elliptischer Kurven ist eine Skalarmultiplikation

$$Q = k * P$$

als mathematische Operation durchzuführen, wobei P ein Punkt auf einer elliptischen Kurve über einen endlichen Körper K ist und k wieder ein Schlüssel oder eine aus diesem abgeleitete Größe ist.

Eine mögliche Umsetzung der Skalarmultiplikation kann durch Implementierung des folgenden Algorithmus auf einem Rechenwerk vorgenommen werden, wobei der Schlüssel k durch eine binäre Darstellung ($b_i$, i=n-1...0) vorgegeben ist:

Algorithmus 1: EC - elliptische Kurve: Q = k * P

```
(1.1) Q - O
(1.2) i - n-1
(1.3) so lange i > -1
(1.3.1) Q ← 2 * Q
(1.3.2) falls bi = 1 dann Q ← Q + P
(1.3.3) i ← i - 1
(1.4) liefere Q
```

Im Fall einer einfachen Stromanalyse (SPA) wird das Profil des Stromverbrauchs einer Skalarmultiplikation analysiert. Die Skalarmultiplikation besteht hauptsächlich aus Additionen und Verdopplungen. Die Operationen unterscheiden sich jedoch erheblich in der Zahl der Elementaroperationen in K, so dass auch der Stromverbrauch unterschiedlich ist. Es kann daher durch einen entsprechenden Seitenkanalangriff auf die einzelnen Bits und damit die binäre Darstellung von k selbst rückgeschlossen werden.

Ein möglicher Schritt zur Abwehr solcher Angriffe besteht darin, die vom Wert eines jeweiligen Bits abhängigen Stromflüsse und Rechenlaufzeiten für beide möglichen Bit-Zustände 0 und 1 abzugleichen, wie im Folgenden gezeigt ist:

Ein Punkt P einer elliptischen Kurve E ist durch seine x-Koordinate und seine y-Koordinate gegeben. Aufgrund der Kurvengleichung der elliptischen Kurve E existieren zu einem x-Wert höchstens zwei unterschiedliche y-Werte $y_1$ und $y_2$, so dass die Punkte $(x,y_1)$ und $(x,y_2)$ Punkte auf der elliptischen Kurve E sind. Um somit einen Punkt auf der elliptischen Kurve E eindeutig festzulegen, ist außer der x-Koordinate nur noch ein Bit an zusätzlicher Information erforderlich.

In dem Fall einer elliptischen Kurve E über endlichen Primkörpern genügt beispielsweise das sog. Least Significant Bit (LSB) der y-Koordinate oder das Vorzeichen der y-Koordinate des jeweiligen Punktes als zusätzliche Information.

Diese Eigenschaften von elliptischen Kurven macht man sich in dem sog. Montgomery-Leiter-Algorithmus zunutze, welcher eine gängige Methode zur Implementierung der Skalarmultiplikation auf elliptischen Kurven darstellt. Der Montgomery-Leiter Algorithmus lässt sich dergestalt implementieren, dass zur Berechnung der x-Koordinate eines skalaren Vielfachen eines Punktes P nur die x-Koordinate von P verwendet wird. Da die Montgomery-Leiter gleichzeitig, wie im Weiteren gezeigt, eine sehr gute Methode ist, einfachen Stromanalysen entgegenzuwirken, wird sie häufig in Kryptosystemen, die auf Embedded Systemen laufen, implementiert.

Gemäß dem im Weiteren beschriebenen Verfahren eines Montgomery-Leiter-Algorithmus wird ein Vielfaches k * P eines Punktes P, der sich auf einer elliptischen Kurve befindet, berechnet.

Der Skalar k = $(b_{n-1}, ...,b_i, ..., b_0)$, gegeben in Binärdarstellung, wird bitweise, beginnend beim so genannten Most Significant Bit (MSB, N1) abgearbeitet.

Algorithmus 2: EC - elliptische Kurve: Q = k * P Montgomery-Leiter:

```
(2.1) R ← P, S ← O
(2.2) i ← n-1
```

(2.3) so lange i > -1
(2.3.1) falls $b_i$ = 1 { S ← S + R, R ← 2 * R }
(2.3.2) sonst { R ← R + S, S ← 2 * S}
(2.3.3) i ← i - 1
(2.4) liefere R, S
(2.5) rekonstruiere k * P aus den Punkten R, S und P

In dem gezeigten Beispiel laufen die Addition und die Verdopplung bitunabhängig völlig gleichförmig ab. Von Seiten der Reihenfolge der Operationen lassen sich somit keine Rückschlüsse auf die Bitfolge ziehen. Problematisch ist jedoch die Sprunganweisung ("falls" bzw. "sonst"), da diese zu einem Sprung zu unterschiedlichen Adressen führt, der sich in einem unterschiedlichen Stromverbrauch bemerkbar macht.

Das Dokument US 2002/0029346 offenbart ein Verfahren zum Mashieren von Kryptografischen Operationen. Das Dokument XP001160513 offenbart ein Montgomery-Leiter Algorithmus.

Somit ist eine der Erfindung zugrunde liegende Aufgabe, ein Verfahren zur sicheren Bearbeitung von Daten anzugeben, bei dem die Sicherheit gegenüber Seitenkanalangriffen weiter erhöht wird.

Erfindungsgemäß wird diese Aufgabe durch ein Verfahren mit den Merkmalen des Anspruch 1 gelöst. Vorteilhafte Weiterbildungen der Erfindung sind in den abhängigen Ansprüchen angegeben.

Erfindungsgemäß wird in einem Verfahren zum sicheren Ermitteln von Daten in einem ersten Prozessor eine mathematische Operation mit einem Schlüssel auf einen Punkt einer elliptischen Kurve angewendet, wobei der Schlüssel als binäre Zahl mit einer Sequenz von Bits (bi) darstellbar ist. Das Verfahren weist einen ersten Befehl (x) auf, welcher in einem weiteren Prozessor zu einer ersten Operation (X) auf mindestens einem Registerinhalt, und einen zweiten Befehl (y), welcher in dem weiteren Prozessor zu einer zweiten Operation (Y) führt. Mindestens ein Wert (d) wird in Abhängigkeit von den beiden Befehlen (x,y) ermittelt. Eine erste Hilfsgröße (R) und eine zweite Hilfsgröße (S) werden initialisiert, also mit Startwerten versehen. Für jedes Bit (bi) des Schlüssels werden sequentiell die folgenden Schritte durchgeführt:

Die erste Hilfsgröße (R) wird an ein erstes Register des weiteren Prozessors übermittelt und die zweite Hilfsgröße (S) wird an ein zweites Register des weiteren Prozessors übermittelt. In Abhängigkeit von dem Wert des Bits (bi) und des mindestens einen Wertes (d) wird ein Befehl zu einer Ausgabevariablen (A) derart zugeordnet, dass entweder der erste Befehl (x) zugeordnet wird oder der zweite Befehl (y) zugeordnet wird. Die Ausgabevariable (A) wird an das Befehlsregister des weiteren Prozessors übertragen.

Abschließend werden die in dem weiteren Prozessor aktualisierten ersten (R) und zweiten (S) Hilfsgrößen ermittelt. Nach Beendigung der Schritte für die Bits (bi) werden die erst (R) und/oder die zweite (S) Hilfsgröße ausgegeben und ein Ergebnis der mathematischen Operation aus der ersten (R) und/oder der zweiten Hilfsgröße (S) ermittelt.

Unter einem weiteren Prozessor ist in dieser Erfindung ohne Ausschluss der Allgemeinheit dieses Begriffs ein Koprozessor, insbesondere ein Krypto-Koprozessor, zu verstehen. Dieser verfügt über einen eingeschränkten Befehlssatz und ist hardwaretechnisch derart geschützt, dass durch Messungen nahezu nicht erkennbar ist, ob gleichwertige oder ungleichwertige Operationen in dem Koprozessor durchgeführt werden.

So zeichnet sich die Erfindung insbesondere dadurch aus, dass in dem Verfahren Anweisungen, so genannte Operationscodes, für den Koprozessor ermittelt werden, die eine oder keine Vertauschung von Registerinhalten innerhalb des Koprozessors bewirken. Aufgrund der technischen Ausgestaltung des Koprozessors kann das Verschieben eines Registerinhalts beispielsweise von Register A nach Register B von außen nicht von einem Verschieben von Register A nach Register C unterschieden werden. Demnach besteht der beschriebene generische Ansatz zur Lösung der Aufgabe insbesondere darin, anstatt Adressen auf Speicherbereiche, welche die zu verarbeitenden Hilfsgrößen enthalten, zu ermitteln, Operationscodes für Instruktionen von Koprozessoren für die bitabhängige Vertauschung von Registerinhalten zu ermitteln. Hierbei macht man sich zunutze, dass Adressen von Registerinhalten in Koprozessoren keine Rolle spielen, da die Hilfsgrößen bereits in die Register des Koprozessors geladen sind und die Register implizit durch den jeweiligen Operationscode adressiert werden.

Insofern hat das erfindungsgemäße Verfahren den Vorteil, dass der Schutz vor Seitenkanalangriffen, insbesondere durch eine Stromanalyse, deutlich erhöht wird, da die Vertauschung zweier Register ausschließlich innerhalb des Koprozessors stattfindet und die Vertauschung beziehungsweise das Nichtvertauschen auf dem Senden zweier Operationscodes basiert, deren Ausführung innerhalb des Koprozessors nicht unterschieden werden kann.

Als weiterer wichtiger Vorteil der vorliegenden Erfindung ergibt sich, dass eine für Seitenkanalangriffe besonders anfällige If-Else-Verzweigung vermieden wird, indem über die Berechnung einer Differenz zwischen den zwei Operationscodes eine implizite Ermittlung der If-Else-Verzweigung vorgenommen wird.

Die Anwendung der vorliegenden Erfindung ist nicht auf Koprozessoren beschränkt. So ist es beispielsweise möglich, das erfindungsgemäße Verfahren zur Auswahl unterschiedlicher Operationscodes zur Implementierung eines selbst modifizierenden Programms zu verwenden und auf diese Weise eine implizite If-Else-Verzweigung zu implementieren. Des Weiteren ist das erfindungsgemäße Verfahren auf andere Implementierungen von schnellen Exponentiationsroutinen und Skalarmultiplikationen übertragbar.

Gemäß einer vorteilhaften Ausgestaltung der vorliegenden Erfindung haben der erste (x) und der zweite (y) Befehl das gleiche Hamminggewicht. Somit wird in vorteilhafter Weise gewährleistet, dass auch die beiden Befehle (x, y) von außen durch Seitenkanalangriffe nicht unterscheidbar sind.

Die vorliegende Erfindung wird nachfolgend an Ausführungsbeispielen anhand der Zeichnungen näher erläutert. Es zeigt

Figur 1    in einer schematischen Darstellung das Zuweisen von Hilfsgrößen (R, S) zu unterschiedlichen Registern eines Koprozessors,

Figur 2    in einer schematischen Darstellung das Zuweisen von Hilfsgrößen (R, S) zu Registern eines Koprozessors durch Operationscodes innerhalb des Koprozessors.

Anhand des in Algorithmus 2 gezeigten Ablaufes einer Montgomery-Leiter gemäß dem Stand der Technik erkennt man, dass in den Verfahrensschritten (2.3.1) und (2.3.2) abhängig vom Bit ($b_i$) lediglich die Hilfsgrößen (R,S) vertauscht sind.

(3.1) falls $b_i$ = 1: { $S \leftarrow S + R, R \leftarrow 2 * R$ }
(3.2) sonst { $R \leftarrow R + S, S \leftarrow 2 * S$ }

Somit kann der Algorithmus 2 weiter vereinfacht werden, indem die Hilfsgrößen am Beginn und am Ende eines Schleifendurchlaufs getauscht werden, wenn das Schlüsselbit den Wert 0 annimmt. Es braucht dann nur noch auf eine der beiden Sprungadressen verwiesen zu werden, mit F1 = { $S \leftarrow S + R, R - 2 * R$ }:

(4.1) falls $b_i$ = 1: F1
(4.2) sonst { tausche (R,S), F1, tausche (R,S) }.

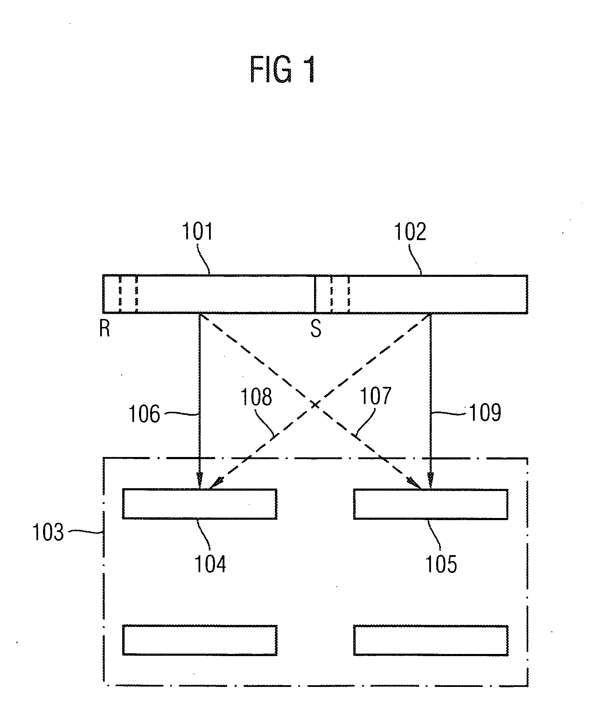

Eine einem solchen Verfahren zugrunde liegende hardwaretechnische Umsetzung des Montgomery-Leiter Algorithmus ist in Figur 1 gezeigt. Zwei Hilfsgrößen (R) 101 und (S) 102 werden abhängig vom Wert eines Schlüsselbits ($b_i$) jeweils in ein erstes 104 oder zweites 105 Register eines Koprozessors 103 geschoben. Hat das Schlüsselbit beispielsweise den Wert 1 wird die Hilfsgröße (R) 101 in das erste Register 104 geschoben 106 und die Hilfsgröße (S) 102 in das zweite Register 105 geschoben 109. Wenn das Schlüsselbit hingegen den Wert 0 annimmt, wird die Hilfsgröße (R) 101 in das zweite Register 105 geschoben 107 und die Hilfsgröße (S) 102 in das erste Register 104 geschoben 108. In dem Koprozessor 103 wird in beiden Fällen die Funktion F1 ausgeführt, so dass die Ergebnisse der Funktion F1 ggf. noch einmal getauscht werden müssen.

Das beschriebene Verfahren hat jedoch den Nachteil, dass die Detektierbarkeit durch Seitenkanalangriffe immer noch besteht, denn abhängig vom Bitwert werden beim Umkopieren zwei Speicherzugriffe pro Rechnerwort erforderlich. Bei längeren Körperelementen werden viele Zugriffe erforderlich, welches sich signifikant in der Stromaufnahme niederschlägt.

Gemäß der vorliegenden Erfindung wird dieser Nachteil behoben, indem das Vertauschen der Hilfsgrößen (R, S) innerhalb des Koprozessors durchgeführt wird.

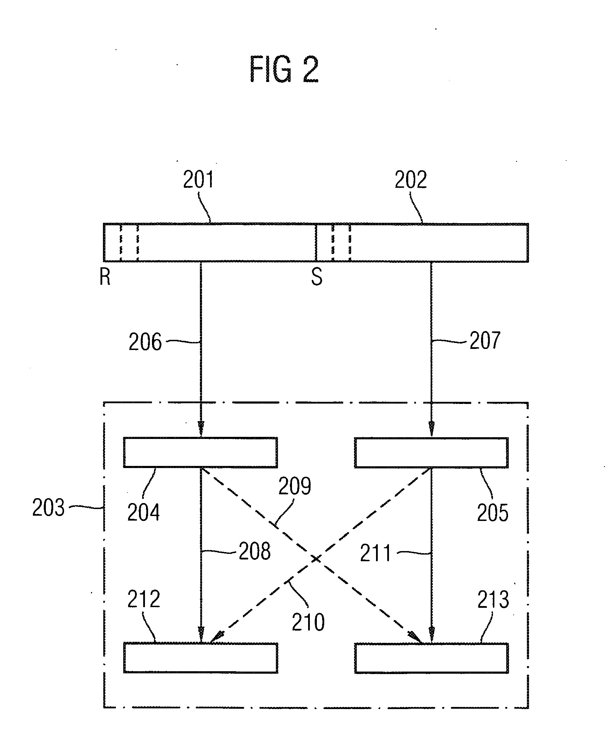

Dieses Vorgehen wird in Figur 2 gezeigt. Unabhängig vom jeweiligen Schlüsselbit ($b_i$) wird die Hilfsgröße (R) 201 in das erste Register 204 des Koprozessors 203 geschoben 206 und die zweite Hilfsgröße (S) 202 in das zweite Register 205 des Koprozessors 203 geschoben 207. Abhängig vom jeweiligen Schlüsselbit ($b_i$) wird jedoch ein Operation Code für den Koprozessor 203 ermittelt und in das Befehlsregister des Koprozessors geschoben. Bei einem Wert von 1 für das Schlüsselbit wird ein erster Operation Code in das Befehlsregister geschoben, so dass die Hilfsgröße (R) im ersten Register 204 in das dritte Register 212 geschoben wird 208 und die Hilfsgröße (S) im zweiten Register 205 in das vierte Register 213 geschoben wird 211. Bei einem Wert von 0 für das Schlüsselbit wird hingegen ein zweiter Operation Code in das Befehlsregister geschoben, so dass die Hilfsgröße (R) im ersten Register 204 in das vierte Register 213 geschoben wird 209 und die Hilfsgröße (S) im zweiten Register 205 in das dritte Register 212 geschoben wird 210.

In einem weiteren Ausführungsbeispiel seien R,S,C interne Datenregister des Koprozessors. Die oben beschriebene Befehlsfolge für den Koprozessor lässt sich darstellen als:

(5.1) if $b_i$=0 then {vertauschen(R,S)}
(5.2) else {do not vertauschen(R,S)}.

Mit Hilfe eines dritten Datenregisters C lässt sich die Befehlsfolge auch folgendermaßen beschreiben:

(6.1) if $b_i$=0 then {C $\leftarrow$ R, R $\leftarrow$ S, S $\leftarrow$ C }
(6.2) else then {C $\leftarrow$ R, R $\leftarrow$ S, R $\leftarrow$ C}

oder

(7.1) C $\leftarrow$ R, R $\leftarrow$ S
(7.2) if $b_i$=0 then {S $\leftarrow$ C}
(7.3) else then {R $\leftarrow$ C} .

Die im Verfahrensschritt (7.1) vorgenommenen Zuweisungen S $\leftarrow$ C und R $\leftarrow$ C führen zu keinem messbaren Unterschied im Stromverbrauch, die bitabhängige Verzweigung ist jedoch nach wie vor gegen Seitenkanalangriffe nicht geschützt. Im Folgenden wird der Befehl S - C durch den Operationscode (x) und der Befehl R $\leftarrow$ C durch den Operationscode (y) beschrieben und weiterhin angenommen, dass ohne Beschränkung der Allgemeinheit x < y gilt. Ein Befehl mit einem Operationscode wird vom Koprozessor ausgeführt, indem man den entsprechenden Operationcode in das Befehlsregister des Koprozessors schreibt. Unter diesen Annahmen kann die Befehlsfolge folgendermaßen beschrieben werden:

(8.1) if bi = 0 then {A $\leftarrow$ x}
(8.2) else then {A $\leftarrow$ y}
(8.3) C - R, R $\leftarrow$ S
(8.4) schreibe den Opcode aus A in das Befehlsregister

Die einzig verbleibende messbare Bitabhängigkeit wird in dem oben beschriebenen Algorithmus durch die Zuweisung des Operationscodes verursacht. Eine Vermeidung der Sprunganweisung in (8.1) und (8.2) wird erfindungsgemäß erzielt, indem zwischen den Befehlen (x) und (y) die Differenz d = y - x gebildet wird, so dass sich das Ergebnis der Sprunganweisung folgendermaßen bitabhängig berechnen lässt:

$$A = x + d \cdot b_i$$

Dieses Verfahren kann weiter verbessert werden durch Hinzunahme zweier Rechnerworte h und h', wobei sich die beiden Rechnerworte (h, h') nur im geringst signifikanten Bit des Rechnerwortes h unterscheiden, welches das jeweilige Schlüsselbit bi ist. Somit ergibt sich bei der Subtraktion h - h' = bi und der gesuchte Operationcode kann folgendermaßen berechnet werden:

$$A = x + h \cdot d - h' \cdot d$$

Dieses Polynom wird in folgendem Algorithmus beschrieben:

(9.1) Rotiere $b_i$, an das LSB des Wortes h
(9.2) Kopiere h nach h' und lösche das LSB von h'
(9.3) A $\leftarrow$ x
(9.4) m $\leftarrow$ h * d
(9.5) A $\leftarrow$ A + m
(9.6) m $\leftarrow$ h' * d
(9.7) A $\leftarrow$ A - m

Wendet man dieses Ergebnis auf den in Algorithmus 2 beschriebenen Montgomery-Leiter Algorithmus an, erhält man den folgenden Algorithmus:

(10.1) x ← Befehl{S ← C} //Vertausche Registerinhalte von R,S

(10.2) y ← Befehl{R ← C} //Keine Vertauschung von R,S

(10.3) R ← P, S - O

(10.4) d ← y - x mit x < y

(10.5) for i ← n-1 to 0 do

(10.6) Rotiere bi an das LSB des Wortes h

(10.7) Kopiere h nach h' und lösche das LSB von h'

(10.8) A ← x

(10.9) m ← h * d

(10.10) A ← A + m

(10.11) m ← h' * d

(10.12) A ← A - m

(10.13) C ← R, R ← S

(10.14) Lade A in Befehlsregister von Koprozessor

(10.15) Berechne im Koprozessor S - S + R, R - 2 * R

(10.16) C ← R, R ← S

(10.17) Lade A in Befehlsregister von Koprozessor

(10.18) end

(10.19) rekonstruiere k * P aus R, S und P

In einem weiteren Ausführungsbeispiel wird die erfindungsgemäße Implementierung bei Verwendung beispielsweise des Koprozessors ACE auf dem Chip SLE66CX320P von Infineon beschrieben.

Der Krypto-Koprozessor ACE besitzt vier Datenregister CR0, CR1, CR2 und CR3 und ein Operandenregister C. In diesem Beispiel sind zwei Hilfsgrößen in die Datenregister CR1 und CR2 geladen, deren Inhalte nun vertauscht werden sollen. Das geheime Bit sei das geringst signifikante Bit (LSB) des Arbeitsregisters A, welches in diesem Fall die Länge 8 Bit besitzt.

Der Krypto-Koprozessor ACE verfügt unter anderem über die Befehle move_CR1_C und move_CR2_c, mit deren Hilfe der Inhalt des Registers C in das Register CR1 beziehungsweise in das Register CR2 geschoben wird. Der Operationcode x für den ersten Befehl lautet 0x6b und der Operationcode y für den zweiten Befehl lautet 0x73. Weil die Differenz d der beiden Operationscodes 8 beträgt, kann die Multiplikation mit h · d im oben beschriebenen Algorithmus (9.4) durch einen Shiftbefehl ersetzt werden und der Algorithmus somit vereinfacht werden. Der folgende Algorithmus zeigt nun die Ermittlung des gewünschten Operationscodes für den ersten oder zweiten Befehl, wobei die Operation & die logische AND-Operation darstellt:

Auswahl der Opcodes

(11.1) Rotiere A zyklisch um drei Bits nach links

(11.2) Setzte B ← A + 0x6b

(11.3) Berechne A ← A & 0xf7 (Ausblenden des drittniedrigsten Bits)

(11.4) Setzte A ← B - A

In Schritt (11.1) wird der Schlüssel und damit das Bit, nach dem unterschieden werden soll, durch einen Shift-Befehl um 3 Bits zyklisch nach links rotiert, was einer Multiplikation mit der Differenz 8 entspricht. In Schritt (11.2) wird der Wert des Opcodes x addiert. In Schritt (11.3) wird das Bit, nach dem unterschieden werden soll, gelöscht und der verbleibende Anteil anschließend im vierten Schritt (11.4) wieder abgezogen.

Die folgende Implementierung ist eine alternative Lösung, wobei die Operation | die logische OR-Operation darstellt:

Auswahl der Opcodes

(12.1) Berechne A & 0xfd (Ausblenden des zweitniedrigsten Bit)

(12.2) Setze A ← A + 1

(12.3) Berechne A & 0x03 (Ausblenden aller Bit bis auf die zwei niederwertigsten)

(12.4) Rotiere A um drei Bit nach links

(12.5) Berechne A | 0x63

Die Anweisungen in den Schritten (12.1) bis (12.3).bewirken, dass in Abhängigkeit vom geringst signifikanten Bit des Schlüssels, nach welchem unterschieden werden soll, dem Register A der Wert 1 zugewiesen wird, falls das Bit den Wert 0 hat oder dem Register A der Wert 2 zugewiesen wird, falls das Bit den Wert 1 hat. In Schritt (12.4) wird der Inhalt des Registers A um 3 Bits nach links rotiert, was einer Multiplikation mit 8 entspricht. In Schritt (12.5) wird der Opcode bestimmt. Der gewünschte Opcode befindet sich danach in Register A.

Unter Verwendung von Algorithmus 12 lautet die gegen Seitenkanalangriffe sichere Vertauschung zweier Register vollständig:

(13.1) Berechne A & 0xfd (Ausblenden des zweitniedrigsten Bit)
(13.2) Setze A = A + 1
(13.3) Berechne A & 0x03 (Ausblenden aller Bit bis auf die zwei niederwertigsten)
(13.4) Rotiere A um drei Bit nach links
(13.5) Berechne A | 0x63
(13.6) Schiebe das ACE-Register CR1 nach C
(13.7) Schiebe das ACE-Register CR2 nach CR1
(13.8) Schreibe den Opcode A in das Befehlsregister des Koprozessors ACE

In Algorithmus 13 werden die Berechnungsschritte zur Bestimmung eines Opcodes für den Krypto-Koprozessor aus Algorithmus 12 mit den Schritten aus Algorithmus 8 zur Vertauschung der Inhalte der Register CR1 und CR2 des Koprozessors in Abhängigkeit von einem gegebenen Schlüsselbit kombiniert.

Die vorliegende Erfindung ist nicht auf die hier beschriebenen Ausführungsbeispiele beschränkt.

## Patentansprüche

1. Verfahren zum sicheren Ermitteln von Daten, bei dem in einem ersten Prozessor eine mathematische Operation mit einem Schlüssel auf einen Punkt einer elliptischen Kurve angewendet wird, wobei der Schlüssel als binäre Zahl mit einer Sequenz von Bits (bi) darstellbar ist,

   - mit einem ersten Befehl (x), welcher in einem weiteren Prozessor zu einer ersten Operation (X) auf mindestens einem Registerinhalt und einem zweiten Befehl (y), welcher in dem weiteren Prozessor zu einer zweiten Operation (Y) führt; umfassend die Schritte:
   - Ermitteln mindestens eines Wertes (d) in Abhängigkeit von den beiden Befehlen (x, y);
   - Initialisieren einer ersten Hilfsgröße (R) und einer zweiten Hilfsgröße (S);
   - sequentiell für jedes Bit (bi) des Schlüssels Durchführen der folgenden Schritte:

      (a) Übermitteln der ersten Hilfsgröße (R) an ein erstes Register und der zweiten Hilfsgröße (S) an ein zweites Register des weiteren Prozessors,
      (b) In Abhängigkeit von dem Wert des Bits (bi) und des mindestens einen Wertes (d) Zuordnung eines Befehls zu einer Ausgabevariablen (A) derart, dass

         • entweder der erste Befehl (x) zugeordnet wird,
         • oder der zweite Befehl (y) zugeordnet wird,

      (c) Übertragen der Ausgabevariablen (A) an das Befehlsregister des weiteren Prozessors,
      (d) Ermitteln der in dem weiteren Prozessor aktualisierten ersten (R) und zweiten (S) Hilfsgröße,

   - Nach Beendigung der Schritte für die Bits (bi) Ausgabe der ersten (R) und/oder:der zweiten (S) Hilfsgröße und Ermitteln eines Ergebnisses der mathematischen Operation aus der ersten (R) und/oder der zweiten Hilfsgröße (S), wobei die erste Operation (X) auf Registerinhalte des weiteren Prozessors, welche dem ersten Befehl (x) zugeordnet ist, zu einer Vertauschung der Inhalte des ersten und des zweiten Registers führt, und bei dem die zweite Operation (Y) auf Registerinhalten des weiteren Prozessors, welche dem zweiten Befehl (y) zugeordnet ist, zu keiner Vertauschung der Inhalte des ersten und des zweiten Registers führt.

2. Verfahren nach Anspruch 1, bei dem
   die erste Hilfsgröße (R) einen Punkt auf einer elliptischen Kurve über einen endlichen Körper repräsentiert und beim Schritt der Initialisierung einen festen Punkt (P) zugewiesen bekommt.

3. Verfahren nach einem der Ansprüche 1 bis 2, bei dem die zweite Hilfsgröße (S) einen Punkt auf einer elliptischen Kurve über einen endlichen Körper repräsentiert und beim Schritt der Initialisierung einen Wert O zugewiesen bekommt.

**4.** Verfahren nach einem der Ansprüche 1 bis 3, bei dem die mathematische Operation eine Skalarmultiplikation (k*P) umfasst.

**5.** Verfahren nach einem der Ansprüche 1 bis 4, bei dem die in dem weiteren Prozessor vorgenommene Aktualisierung der ersten (R) und zweiten (S) Hilfsgröße folgende Schritte umfasst,

- in einer ersten Rechenoperation wird eine Addition zweier Punkte auf einer elliptischen Kurve vorgenommen,
- und in einer zweiten Rechenoperation wird eine skalare Multiplikation eines Punktes auf einer elliptischen Kurve mit einem Faktor 2 beziehungsweise die Addition mit sich selbst vorgenommen,
- und die Ermittlung der aktualisierten ersten und zweiten Hilfsgrößen derart erfolgt, dass in Abhängigkeit von dem Wert des Bits (bi) jeweils ein Ergebnis der ersten und zweiten Rechenoperation einer der beiden Hilfsgrößen (R,S) zugeordnet wird.

**6.** Verfahren nach einem der Ansprüche 1 bis 5, bei dem der Wert (d) ein Differenzwert aus dem Unterschied der Bitdarstellung zwischen den beiden Befehlen (x,y) beträgt.

**7.** Verfahren nach Anspruch 6, bei dem
im Schritt (b) der Differenzwert (d) zu dem ersten Befehl (x) in Abhängigkeit von dem Wert des aktuellen Bits (bi) hinzugefügt wird, indem

- ein erstes Rechnerwort (h1) gebildet wird, welches das aktuelle Bit (bi) in der sequentiellen Verarbeitung enthält;
- das erste Rechnerwort (h1) mit dem Differenzwert (d) zu einem ersten Produkt (m1) multipliziert wird;
- ein erster Zwischenwert aus einer Addition des ersten Produkts (m1) zu dem ersten Befehl (x) ermittelt wird;
- aus dem ersten Rechnerwort (h1) ein zweites Rechnerwort (h2) gebildet wird, in dem das Bit an der Position des aktuellen Bits (bi) auf Null gesetzt wird;
- das zweite Rechnerwort (h2) mit dem Differenzwert (d) zu einem zweiten Produkt (m2) multipliziert wird;
- die Ausgabevariable (A) aus einer Subtraktion des zweiten Produkts (m2) von dem ersten Zwischenergebnis ermittelt wird,
- derart, dass der Ausgabevariablen (A)

  • entweder der erste Befehl (x) zugeordnet wird,
  • oder der zweite Befehl (y) zugeordnet wird.

**8.** Verfahren nach Anspruch 6, bei dem
im Schritt (b) in Abhängigkeit von dem Wert des Bits (bi) der Differenzwert (d) von dem zweiten Befehl (y) subtrahiert wird, derart, dass der Ausgabevariablen (A)

  • entweder der erste Befehl (x) zugeordnet wird,
  • oder der zweite Befehl (y) zugeordnet wird.

**9.** Verfahren nach einem der Ansprüche 1 bis 8, bei dem das aktuelle Bit (bi) in der sequentiellen Verarbeitung das geringst signifikante Bit (LSB) ist.

**10.** Verfahren nach einem der Ansprüche 1 bis 9, bei dem

- der erste Befehl (x) zu einem Übermitteln des Inhaltes eines dritten Registers des weiteren Prozessors an das erste Register des weiteren Prozessors führt und der zweite Befehl (y) zu einem Übermitteln des Inhaltes des dritten Registers an das zweite Register des weiteren Prozessors führt,
- nach Schritt (a) in einem weiteren Schritt ein Befehl zur Übermittelung des Inhaltes des ersten Registers an das dritte Register und ein Befehl zur Übermittlung des Inhaltes des zweiten Registers an das erste Register an das Befehlsregister des weiteren Prozessors übermittelt wird.

**11.** Verfahren nach einem der Ansprüche 1 bis 10, bei dem der erste (x) und der zweite (y) Befehl das gleiche Hamming-Gewicht haben.

# EP 1 999 884 B1

**Claims**

1. Method for the secure determination of data in which in a first processor a mathematical operation with a key is applied to a point of an elliptical curve, wherein the key may be depicted as a binary number with a sequence of bits $(b_i)$

   - with a first instruction (x) which in a further processor leads to a first operation (X) on the contents of at least one register and a second instruction (y), which in the further processor leads to a second operation (Y), comprising the steps:
   - determination of at least one value (d) depending upon the two instructions (x, y);
   - initialisation of a first auxiliary variable (R) and a second auxiliary variable (S);
   - the sequential performance of the following steps for every bit $(b_i)$ of the key:

     (a) communication of the first auxiliary variable (R) to a first register and the second auxiliary variable (S) to a second register of the further processor,
     (b) depending upon the value of the bit $(b_i)$ and on the at least one value (d), assignment of an instruction to an output variable (A) in such a way that

       • either the first instruction (x) is assigned,
       • or the second instruction (y) is assigned,

     (c) transmission of the output variable (A) to the instruction register of the further processor,
     (d) determination of the first (R) and second (S) auxiliary variables updated in the further processor,

   - after the termination of the steps for the bits $(b_i)$, output of the first (R) and/or the second (S) auxiliary variable and determination of a result of the mathematical operation from the first (R) and/or the second auxiliary variable (S), wherein the first operation (X) on register contents of the further processor, which is assigned to the first instruction (x), results in a transposition of the contents of the first and the second register, and in which the second operation (Y) on register contents of the further processor, which is assigned to the second instruction (y), does not result in a transposition of the contents of the first and the second register.

2. Method according to claim 1, in which the first auxiliary variable (R) represents a point on an elliptical curve over a finite field and in the initialisation step is assigned a fixed point (P).

3. Method according to any one of claims 1 to 2, in which the second auxiliary variable (S) represents a point on an elliptical curve over a finite field and in the initialisation step is assigned a value O.

4. Method according to any one of claims 1 to 3, in which the mathematical operation comprises a scalar multiplication $(k*P)$.

5. Method according to any one of claims 1 to 4, in which the updating of the first (R) and second (S) auxiliary variables performed in the further processor comprises the following steps:

   - in a first arithmetic operation, the addition of two points on an elliptical curve is performed,
   - and in a second arithmetic operation, a scalar multiplication of a point on an elliptical curve with a factor 2 or its addition to itself is performed,
   - and the determination of the updated first and second auxiliary variables is performed in such a way that, depending upon the value of the bit $(b_i)$, in each case a result of the first and second arithmetic operation is assigned to one of the two auxiliary variables (R, S).

6. Method according to any one of claims 1 to 5, in which the value (d) is a differential value from the difference between the bit representation of the two instructions (x, y).

7. Method according to claim 6, in which
   in step (b) the differential value (d) is added to the first instruction (x) depending upon the value of the current bit (bi), in which

   - a first computer word (hl) is formed which contains the current bit $(b_i)$ in the sequential processing,
   - the first computer word (hl) is multiplied by the differential value (d) to produce a first product (ml),

- a first intermediate value is determined from an addition of the first product (ml) to the first instruction (x),
- from the first computer word (hl),a second computer word (h2) is formed in which the bit at the position of the current bit ($b_i$) is set to zero,
- the second computer word (h2) is multiplied by the differential value (d) to form a second product (m2),
- the output variable (A) is determined from a subtraction of the second product (m2) from the first intermediate result,
- in such a way that

    • either the first instruction (x)
    • or the second instruction (y)

is assigned to the output variable (A).

8. Method according to claim 6, in which
in step (b) depending upon the value of the bit ($b_i$) the differential value (d) is subtracted from the second instruction (y) in such a way that

    - either the first instruction (x),
    - or the second instruction (y)

is assigned to the output variable (A).

9. Method according to any one of claims 1 to 8, in which the current bit ($b_i$) in the sequential processing is the least significant bit (LSB).

10. Method according to any one of claims 1 to 9, in which

    - the first instruction (x) leads to a communication of the contents of a third register of the further processor to the first register of the further processor and the second instruction (y) leads to a communication of the contents of the third register to the second register of the further processor,
    - after step (a) in a further step an instruction to transmit the contents of the first register to the third register and an instruction to transmit the contents of the second register to the first register is transmitted to the instruction register of the further processor.

11. Method according to any one of claims 1 to 10, in which the first (x) and the second (y) instruction have the same Hamming weight.

**Revendications**

1. Procédé de détermination sécurisée de données dans lequel est appliquée à un point d'une courbe elliptique, dans un premier processeur, une opération mathématique avec une clé, la clé pouvant être représentée sous la forme d'un nombre binaire avec une séquence de bits ($b_i$),

    - avec un premier ordre (x) qui entraîne une première opération (X) sur au moins un contenu de registre dans un autre processeur et un deuxième ordre (y) qui entraîne une deuxième opération (Y) dans l'autre processeur, comprenant les étapes suivantes :
    - détermination d'au moins une valeur (d) en fonction des deux ordres (x, y) ;
    - initialisation d'une première grandeur auxiliaire (R) et d'une deuxième grandeur auxiliaire (S) ;
    - exécution séquentielle, pour chaque bit ($b_i$) de la clé, des étapes suivantes :

        (a) transmission de la première grandeur auxiliaire (R) à un premier registre et de la deuxième grandeur auxiliaire (S) à un deuxième registre de l'autre processeur ;
        (b) association d'un ordre à une variable de sortie (A) en fonction de la valeur du bit ($b_i$) et de l'au moins une valeur (d) de manière telle que :

           • soit le premier ordre (x) est associé,
           • soit le deuxième ordre (y) est associé ;

(c) transmission de la variable de sortie (A) au registre d'ordres de l'autre processeur ;

(d) détermination de la première grandeur auxiliaire (R) et de la deuxième grandeur auxiliaire (S) actualisées dans l'autre processeur ;

- lorsque les étapes pour les bits ($b_i$) sont terminées, production en sortie de la première grandeur auxiliaire (R) et/ou de la deuxième grandeur auxiliaire (S) et détermination d'un résultat de l'opération mathématique à partir de la première grandeur auxiliaire (R) et/ou de la deuxième grandeur auxiliaire (S), la première opération (X) sur des contenus de registres de l'autre processeur, laquelle est associée au premier ordre (x), entraînant une permutation des contenus des premier et deuxième registres, et la deuxième opération (Y) sur des contenus de registres de l'autre processeur, laquelle est associée au deuxième ordre (y), n'entraînant pas de permutation des contenus des premier et deuxième registres.

2. Procédé selon la revendication 1, dans lequel la première grandeur auxiliaire (R) représente un point sur une courbe elliptique sur un corps fini et se voit affecter un point fixe (P) lors de l'étape de l'initialisation.

3. Procédé selon l'une des revendications 1 à 2, dans lequel la deuxième grandeur auxiliaire (S) représente un point sur une courbe elliptique sur un corps fini et se voit affecter une valeur O à l'étape de l'initialisation.

4. Procédé selon l'une des revendications 1 à 3, dans lequel l'opération mathématique inclut une multiplication scalaire (k*P).

5. Procédé selon l'une des revendications 1 à 4, dans lequel l'actualisation de la première grandeur auxiliaire (R) et de la deuxième grandeur auxiliaire (S) opérée dans l'autre processeur comprend les étapes suivantes :

- une addition de deux points sur une courbe elliptique est effectuée dans une première opération de calcul ; et
- dans une deuxième opération de calcul est effectuée une multiplication scalaire d'un point sur une courbe elliptique avec un facteur 2 respectivement l'addition avec elle-même ; et
- la détermination des première et deuxième grandeurs auxiliaires actualisées s'effectue de manière telle qu'un résultat des première et deuxième opérations de calcul est respectivement associé à l'une des deux grandeurs auxiliaires (R, S) en fonction de la valeur du bit ($b_i$).

6. Procédé selon l'une des revendications 1 à 5, dans lequel la valeur (d) est une valeur différentielle issue de la différence de la représentation binaire entre les deux ordres (x, y).

7. Procédé selon la revendication 6, dans lequel la valeur différentielle (d), à l'étape (b), est ajoutée au premier ordre (x) en fonction de la valeur du bit actuel ($b_i$) :

- par formation d'un premier mot machine (h1) qui contient le bit actuel ($b_i$) dans le traitement séquentiel ;
- par multiplication du premier mot machine (h1) par la valeur différentielle (d) pour obtenir un premier produit (m1) ;
- par détermination d'une première valeur intermédiaire à partir d'une addition du premier produit (m1) et du premier ordre (x) ;
- par formation, à partir du premier mot machine (h1), d'un deuxième mot machine (h2) dans lequel le bit à la position du bit actuel ($b_i$) est forcé à zéro ;
- par multiplication du deuxième mot machine (h2) par la valeur différentielle (d) pour obtenir un deuxième produit (m2) ;
- par détermination de la variable de sortie (A) à partir d'une soustraction du deuxième produit (m2) du premier résultat intermédiaire ;
- de manière telle qui :

• soit le premier ordre (x),
• soit le deuxième ordre (y)

est associé à la variable de sortie (A).

8. Procédé selon la revendication 6, dans lequel la valeur différentielle (d), à l'étape (b), en fonction de la valeur du bit ($b_i$), est soustraite du deuxième ordre (y) de manière telle qui :

• soit le premier ordre (x),
• soit le deuxième ordre (y)

est associé à la variable de sortie (A).

9. Procédé selon l'une des revendications 1 à 8, dans lequel le bit actuel ($b_i$) dans le traitement séquentiel est le bit de poids faible (LSB).

10. Procédé selon l'une des revendications 1 à 9, dans lequel :

- le premier ordre (x) entraîne une transmission du contenu d'un troisième registre de l'autre processeur au premier registre de l'autre processeur et le deuxième ordre (y) entraîne une transmission du contenu du troisième registre au deuxième registre de l'autre processeur ;
- à la suite de l'étape (a), dans une autre étape, un ordre de transmission du contenu du premier registre au troisième registre et un ordre de transmission du contenu du deuxième registre au premier registre sont transmis au registre d'ordres de l'autre processeur.

11. Procédé selon l'une des revendications 1 à 10, dans lequel le premier ordre (x) et le deuxième ordre (y) ont le même poids de Hamming.

# FIG 1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020029346 A